# EUROPÄISCHE PATENTANMELDUNG

(11) **EP 0 761 526 A2**
(43) Veröffentlichungstag der Anmeldung: **12.03.1997**
(21) Anmeldenummer: 96114396.3
(22) Anmeldetag: 09.09.1996
(51) Int. Cl.: B62J 9/00

(54) **Als Gepäckträger ausgebildeter Korb**

(30) Priorität: 09.09.1995 DE 29514512 U
(71) Anmelder: Boneberger, Georg, 87700 Memmingen (DE)
(72) Erfinder: Boneberger, Georg, 87700 Memmingen (DE)
(74) Vertreter: Pfister, Helmut, Dipl.-Ing.

(57) **Zusammenfassung**

Ein Gepäckträger (3) mit Korb (1) weist am Boden eine mehrteilige Platte (10) auf, wobei entweder Streifen (16) mittels des Scharnieres (15) mit dem Mittelteil der Bodenplatte (10) verbunden sind, oder die Bodenplatte (10) aus mehreren ausziehbaren Platten besteht. Die Seitenwände (13) sind ebenso wie Vorder- und Rückwand (11,12) über die Scharniere (17) mit der Bodenplatte (10) verbunden. Eine der Seitenwände (13) bildet im zusammengeklappten Zustand den Deckel, der abschließbar ist. Der aufgerichtete Korb (1) wird mittels Arretierungen (21) und Gegenstücken (23) fixiert. An der Unterseite des Korbbodens befinden sich schwalbenschwanzähnliche Führungen zum Befestigen des Korbes (1) auf dem Gepäckträger (3) des Fahrrades.

## Beschreibung

Die Erfindung betrifft einen Gepäckträger mit Korb für Zweiradfahrzeuge, insbesondere Fahrräder, im wesentlichen bestehend aus Bodenplatte und daran beweglich angeordnete Vorder-, Rück- und Seitenwände.

Bisher bekannte Fahrradkörbe zum Transport vornehmlich auf dem Gepäckträger des Fahrrades bestehen aus einem Drahtgerüst in Form eines sich nach oben leicht erweiternden Quaders und werden mit dem am Gepäckträger befindlichen Spanner festgespannt. Als weiteres Hilfsmittel zum Befestigen dienen Gummiseile mit Haken oder ähnlichem. Damit der Korb seinen Zweck erfüllen kann, muß er eine bestimmte Mindestgröße aufweisen, und zwar sowohl in seinen Breiten-, als auch in seinen Längen- und Höhenabmessungen. Ein solcher Korb steht dann über das Fahrrad seitlich und nach hinten vor. Auch kann er ab einer bestimmten Höhenabmessung nicht mehr unter den Sattel des Fahrrades geschoben werden. Das ist insbesondere dann lästig, wenn der Korb ohne Inhalt transportiert wird, sein Fassungsvermögen also überhaupt nicht gebraucht wird.

Die Erfindung hat es sich deshalb zur Aufgabe gemacht, einen Gepäckträger für Zweiradfahrzeuge vorzusehen, der einfach und sicher zu befestigen ist und dessen Ausmaße den jeweiligen Bedürfnissen gerecht werden.

Zur Lösung dieser Aufgabe geht die Erfindung aus von einem Gepäckträger mit Korb der oben erwähnten Art und schlägt die im kennzeichnenden Teil des Anspruches 1 angegebenen Merkmale vor. Insbesondere ich hierbei vorgesehen, daß in der Bodenplatte parallel zu zwei gegenüberliegenden Seiten mit geringem Abstand zur Kante Scharniere vorgesehen sind, die einen Streifen Bodenplatte und daran anschließend die Seitenwände tragen.

So lassen sich die Seitenwände zusammen mit einem Streifen der Bodenplatte nach innen klappen, und die Breite des Korbes wird verringert. Der besondere Effekt entsteht dadurch, daß die Seitenwände nicht direkt an den Kanten eingeklappt werden, sondern noch einen Teil der Bodenplatte mitnehmen.

Bei einer weiteren vorteilhaften Ausgestaltung der Erfindung sitzen die Scharniere direkt an der Kante der Bodenplatte, und die Bodenplatte ist mehrteilig, beispielsweise zweiteilig und ausziehbar ausgebildet.

Auch auf diese Weise läßt sich die Grundfläche des Korbes einfach vergrößern, indem die Bodenplatte zum Beispiel quer zur Fahrtrichtung ausgezogen wird. Im zusammengelegten Zustand steht der Korb so trotz seines großen Fassungsvermögens kaum über die Längsausmaße des Fahrrades hervor. Das Ausziehen des Korbes erfolgt über einen einfachen Schiebemechanismus mit Hilfe von Schienen und Führungen, die wenig Platz beanspruchen. Im zusammengeschobenen Zustand liegen die beiden Bodenteile übereinander.

Es ist weiterhin günstig, wenn die Vorder- und die Rückwand über Scharniere nach innen klappbar mit der Bodenplatte verbunden sind. Auf diese Weise kann der ganze Korb flach zusammengelegt werden und beansprucht auch beim Verstauen, zum Beispiel zu Aufbewahrungszwecken, wenig Platz.

Günstig ist es, wenn die Höhe der Vorder- und der Rückwand je höchstens die halbe Länge der Längsabmessung der Bodenplatte aufweist. So können Vorder- und Rückwand parallel zur Bodenplatte eingeklappt werden und bilden so mit den eingeklappten Seitenwänden ein flaches Paket mit einer im wesentlichen ebenen Oberfläche. Auf den eingeklappten Korb können auch mittels geeigneter Befestigungsmittel, wie Gurte oder dergleichen, sperrige Teile, die beispielsweise für den Korb zu groß sind, befestigt werden.

Bei einer bevorzugten Ausführungsform der Erfindung sind die Seitenwände in etwa rechtwinklig mit Laschen verbunden, die an die Streifen der Bodenplatte anschließen und parallel zur Rück- bzw. Vorderwand verlaufen. Diese Laschen erstrecken sich bis zum Scharnier in der Bodenplatte, so daß Rück- und Vorderwand eine Breite aufweisen, die dem Abstand der Scharniere in der Bodenplatte entspricht. Beim Zusammenklappen werden Vorder- und Rückwand zuerst nach innen gelegt und liegen plan auf dem mittleren Teil der Bodenplatte auf, worauf die beiden Seitenteile mit den einstückig verbundenen Laschen darübergelegt werden. Die Laschen übergreifen auf diese Weise im geschlossenen Zustand die Scharniere von Vorder- und Rückwand, was ein Verschmutzen oder eine andere Beschädigung der Scharniere beim Transport des zusammengelegten Korbes verhindert.

Zusätzlich können die Laschen vorteilhafterweise mit Rundungen ausgestattet sein, die die Vorder- und Rückwand im aufgerichteten Zustand umgreifen oder ergänzen. Die Rundungen tragen dabei Arretierungen, die mit Gegenstücken auf Vorder- und Rückwand zusammenwirken.

Wenn die Wände aufgerichtet sind, bilden die Rundungen der Laschen eine Auflage für Vorder- und Rückwand und tragen so zur Stabilität des Korbes bei. Wenn die Arretierungen mit den Gegenstücken verbunden sind, wird auch vermieden, daß der Korb ungewollt sich zusammenklappt. Bei den Arretierungen handelt es sich beispielsweise um Haken und Ösen, die günstigerweise so angeordnet sind, daß jeweils die Rundungen einer Seite einmal einen Haken und einmal eine Öse tragen. Auf diese Weise lassen sich die Arretierungen mit den Gegenstücken auch zur Fixierung des zusammengeklappten Zustandes verwenden.

Im zusammengeklappten Zustand weisen die Rundungen nach unten und liegen in etwa nebeneinander, was ein Zusammenwirken von Arretierung und Gegenstück auf zwei gegenüberliegenden Rundungen ermöglicht.

Die Rundungen dienen im zusammengeklappten Zustand zum Schutz der vorzugsweise unten an der Bodenplatte vorgesehenen Befestigungsmittel, wenn der Korb im zusammengeklappten Zustand auf dem Boden oder dergleichen abgestellt wird.

Zum weiteren Schutz der am Boden vorgesehenen Befestigungsmittel sind vorteilhafterweise an den vier Ecken nach unten ragende Vorsprünge vorgesehen, die aus den Seitenwänden gebildet sind.

Bei diesen Vorsprüngen handelt es sich beispielsweise um leichte Rundungen, die an den beiden unteren Ecken an beiden Seitenwänden angeformt sind Die Laschen, die einstückig mit den Seitenwänden verbunden sind, sind ebenfalls nach unten verlängert und entsprechen der Form der Vorsprünge, bis sie auf der Unterseite des Korbes in die Bodenplattenstreifen übergehen. Die Vorsprünge bilden ebenso wie die Rundungen im zusammengeklappten Zustand einen Schutz für die Befestigungsmittel des Korbes im Gebrauchszustand. Bei den Befestigungsmitteln handelt es sich beispielsweise um Haken, die teilweise elastisch an der Unterseite der Bodenplatte des Korbes angeordnet sind und sich in die Sprossen des Gepäckträgers einhängen lassen. Durch die nach unten ragenden Vorsprünge bzw. Rundungen wird vermieden, daß der Korb beim Aufstellen auf dem Boden auf den Befestigungsmitteln zu stehen kommt, wodurch diese beschädigt werden können und auch der Korb sich nicht in eine stabile Lage bringen läßt. Selbstverständlich sind auch andere Arten von Vorsprüngen oder Füßen, wie beispielsweise Bügel oder andere nach unten ragende Elemente, möglich.

Bei einer bevorzugten Ausführungsform der Erfindung sind unten an der Bodenplatte quer zur Fahrtrichtung verlaufende schalbenschwanzartige Befestigungsmittel vorgesehen. Diese schwalbenschwanzähnlichen Befestigungsmittel wirken mit am Gepäckträger längs ausgerichteten Führungen zusammen, wobei der Korb seitlich auf den Gepäckträger aufgeschoben wird. Die Befestigungsmittel sind so ausgebildet, daß sie nach dem Aufsetzen des Korbes einschnappen und so ein unbeabsichtigtes Lösen des Korbes vom Gepäckträger verhindern.

Bei einer anderen Möglichkeit der Befestigung des Korbes am Fahrrad werden am Gepäckträger beispielsweise parallel zu den Holmen jeweils weitere Holme angeordnet, so daß zwei Doppelholme entstehen, zwischen denen beispielsweise nach oben ragende Stifte, Schrauben oder dergleichen angeordnet sind.

Diese Stifte entsprechen Bohrungen in der Bodenplatte, durch die diese Stifte geführt werden und dann mittels Muttern oder dergleichen befestigt werden. Zweckmäßigerweise werden an der Bodenplatte des Korbes mehrere solcher Bohrungen angeordnet, so daß der Korb in mehreren Stellungen auf dem Gepäckträger fixiert werden kann, insbesondere auch in einer Position, bei der Vorder- und Rückwand parallel zur Fahrtrichtung sind. Auf diese Weise wird eine zusätzliche Variation des Korbes erreicht, was seine Gebrauchsfähigkeit erhöht.

Als günstig hat es sich herausgestellt, wenn die Seitenwände im Inneren des Korbes angeordnete, nach oben ausziehbare Verlängerungen aufweisen. So kann die Kapazität des Korbes einfach erhöht werden, während die Verlängerungen zum Zusammenklappen des Korbes einfach in den Seitenwänden versenkt werden. Günstigerweise erweitern sich Vorder-, Rück- und Seitenwände des Korbes nach oben leicht, was auch bedingt, daß die Verlängerungen schräg nach oben ausgezogen werden. Eine Variante der Auszugsbahn der Verlängerungen ist eine leichte Kurvenbahn, was bedingt, daß auch die Seitenwände, die die Verlängerungen tragen, leicht gekrümmt sind. Möglich ist es auch, die kurvenartige Bewegung dadurch zu erreichen, daß entsprechende Führungen für die Endstäbe an den Innenseiten der Seitenwände vorgesehen werden.

Vorteilhafterweise bildet im zusammengeklappten Zustand eine der Seitenwände einen Deckel. Dieser Deckel weist an seiner im zusammengeklappten Zustand nach oben weisenden Seite einen Gepäckspanner auf.

Der Gepäckspanner entspricht in Bau- und Funktionsweise im wesentlichen dem Gepäckspanner, wie er von bisher üblichen Gepäckträgern bekannt ist. Dadurch kann der Korb im zusammengeklappten Zustand wie ein Gepäckträger benutzt werden und beispielsweise sperrige Lasten aufnehmen.

Als günstig hat es sich herausgestellt, wenn ein Schloß zum Absperren des zusammengeklappten Korbes vorgesehen ist. So kann der zusammengeklappte Korb zum Beispiel Geld oder Wertsachen aufnehmen und dient als eine Art Sicherheitsfach. Des weiteren bewirkt ein Schloß aber auch eine Arretierung des Korbes bzw. Gepäckträgers am Rahmen des Fahrrades. Dadurch wird eine unbefugte Demontage des Korbes verhindert.

Es ist weiterhin vorteilhaft, wenn der Korb mit einem Tragelement versehen ist.

Als Tragelement kommen beispielsweise Textilschlaufen, Metall- oder Kunststoffbügel in Frage, wobei die Tragelemente jeweils im Bedarfsfall abnehmbar ausgebildet sind. So kann der Korb auch durch sein leichtes Demontieren vom Gepäckträger als Einkaufskorb verwendet werden, und es entfällt das lästige Umpacken des Korbinhaltes.

Der Korb kann vorteilhafterweise zum Beispiel aus Lochblech gefertigt sein, das den Vorteil hat, daß es stabil ist und dabei ein relativ geringes Gewicht aufweist. Als Blech kann Eisen- oder Aluminiumblech verwendet werden. Es kommt aber auch Kunststoffmaterial in Frage.

Es ist vorgesehen, den Korb als Nachrüstartikel zur Montage auf dem schon vorhandenen Gepäckträger anzubieten. Falls der Korb Erstausstattung eines Fahrrades bildet, kann die Grundplatte als Teil des Gepäckträgers verwendet werden, so daß auf zusätzliche Verbindungsmittel verzichtet werden kann. Dadurch ergibt sich insbesondere ein Gewichtsvorteil.

In einer weiteren Ausgestaltung der Erfindung kann beispielsweise die Grundplatte auch aus drei oder mehr Ausziehelementen bestehen, wobei ein Teil der Grundplatte selber mit dem Gepäckträger verbunden wird und an diesem Teil Führungen für die weiteren, den Korbboden bildenden Platten vorgesehen sind. Durch geeignete Mittel, zum Beispiel eine Zahnstangenführung oder Seilzüge oder dergleichen, wird eine gleichförmige Bewegung erreicht. Es kann aber auch eine U-Schienenführung vorgesehen sein.

Zum Aufrichten des Korbes sind an den Korbwänden U-förmige federnde Schnappelemente vorgesehen, die in entsprechende Ausnehmungen oder dergleichen der angrenzenden Korbwände greifen. Bestehen die Korbwände beispielsweise aus Drahtgeflecht oder aus Lochblech, so greifen die Schnappelemente direkt in die Korbwand.

Um dem Korb ein größeres Fassungsvermögen zu geben, kann vorgesehen werden, daß die Korbseitenwände mit ausklappbaren Elementen versehen sind, die über Scharniere mit dem Korb verbunden sind. Diese können bei Bedarf herausgeklappt werden und verleihen dem Korb ein größeres Aufnahmevolumen.

Wird der Korb nicht benutzt, so verbleibt er im zusammengeklappten Zustand auf dem Gepäckträger, so daß beispielsweise der Gepäckspannber benutzt werden kann. Auf dem Deckel, der den mit Schrauben oder Nieten befestigten Gepäckspanner trägt, können zum Beispiel nach oben vorstehende Rippen vorgesehen werden, die ein Verrutschen der Ladung vermeiden. Auch kann der Deckel beispielsweise am Rand eine nach oben stehende Bördelung aufweisen, so daß insbesondere kleine Elemente nicht vom Deckel gleiten können. In Zusammenwirkung mit dem Gepäckspanner wird so eine große Verwendungsbreite des Gepäckträgers erreicht.

In der Zeichnung ist ein erfindungsgemäßes Ausführungsbeispiel eines Gepäckträgers mit Korb schematisch dargestellt. Es zeigen:

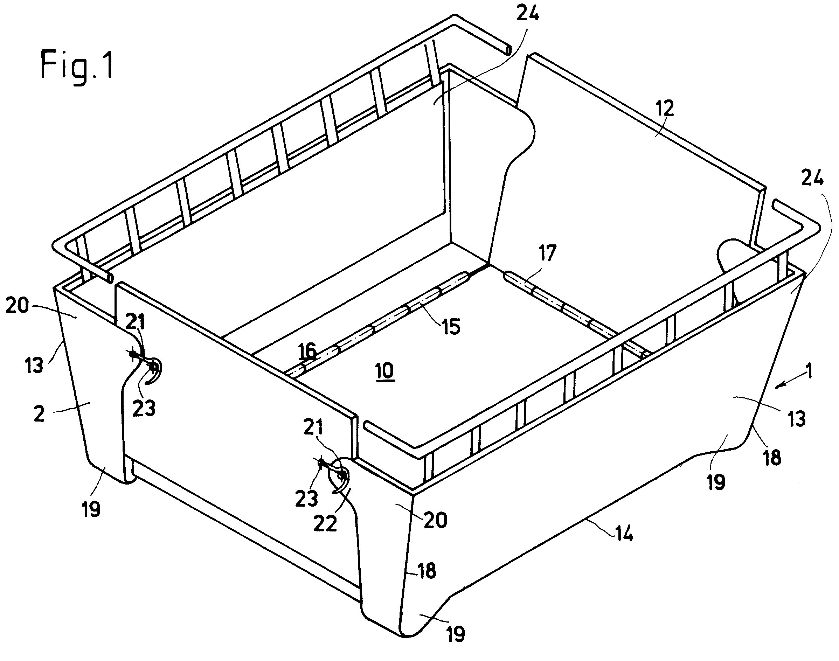

- Fig. 1: eine perspektivische Ansicht eines Korbes in Gebrauchsstellung,
- Fig. 2: eine perspektivische Darstellung eines erfindungsgemäßen Korbes, teilweise zusammengeklappt,

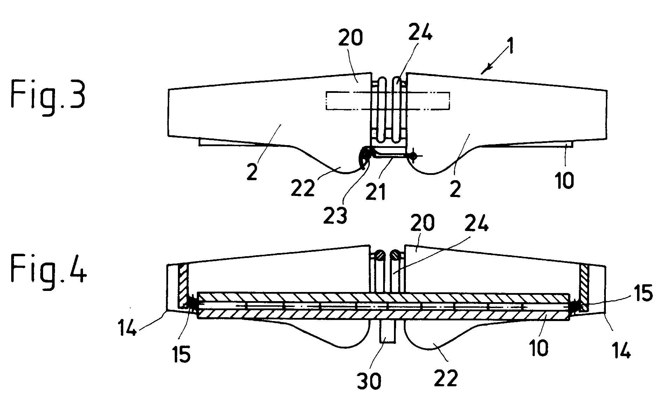

- Fig. 3: eine Vorderansicht eines erfindungsgemäßen Korbes im zusammengeklappten Zustand,
- Fig. 4: eine Vorderansicht eines erfindungsgemäßen Korbes im zusammengeklappten Zustand teilweise im Schnitt,
- Fig. 5: eine Seitenansicht eines Ausführungsbeispieles eines erfindungsgemäßen Korbes im montierten Zustand,
- Fig. 6: eine Seitenansicht eines weiteren Ausführungsbeispieles im montierten Zustand,
- Fig. 7: eine Seitenansicht eines weiteren Ausführungsbeispieles eines montierten Korbes gemäß der Erfindung,
- Fig. 8: eine Draufsicht auf einen Gepäckträger,
- Fig. 9: eine Draufsicht auf ein abgewandeltes Ausführungsbeispiel eines erfindungsgemäßen Gepäckträgers,
- Fig. 10: einen Schnitt durch die Darstellung der Fig. 9 entsprechend der Schnittlinie X-X und
- Fig. 11: eine Ansicht des erfindungsgemäßen Gepäckträgers der in den Fig. 9 und 10 dargestellt ist, jedoch im zusammengeklappten Zustand.

Der Korb 1 besteht im wesentlichen aus der Bodenplatte 10, der Vorderwand 11, der Rückwand 12 und den Seitenwänden 13. An die Kante 14 der Seitenwände 13 schließt sich ein schmaler Streifen 16 der Bodenplatte 10 an, der dann über das Scharnier 15 mit dem Mittelteil der Bodenplatte 10 verbunden ist.

An die Seitenwände 13 schließen sich rechtwinklig die Laschen 2 an, die in Gebrauchsstellung parallel zur Vorder- bzw. Rückwand 11,12 ausgerichtet sind. Die Laschen 2 weisen in ihrem unteren Bereich die gleiche Breite auf wie der Streifen 16, mit dem sie verbunden sind und erweitern sich nach oben hin. In ihrem oberen Bereich 20 tragen die Laschen 2 Rundungen 22, die in der Gebrauchsstellung des Korbes in runde Ausnehmungen 25 greifen und an ihrer Außenseite Arretierungen 21 aufweisen. Die Arretierungen 21 wirken mit Gegenstücken 23 zusammen, die jeweils auf der Vorder- bzw. Rückwand angeordnet sind. Bei den Arretierungen 21 mit den Gegenstücken 23 handelt es sich beispielsweise um Haken mit Stiften oder Ösen, die einfach zu bedienen sind und die so angeordnet sind, daß im zusammengeklappten Zustand des Korbes jeweils zwei nebeneinander liegende Rundungen einer Seite einen Haken und einen Stift bzw. eine Öse tragen. Auf diese Weise können Arretierungen und Gegenstücke auch zur Sicherung des zusammengeklappten Zustandes verwendet werden.

Die Ausnehmungen 25, die jeweils paarweise an den Seitenkanten von Vorder- und Rückwand angeordnet sind, sind den Rundungen 22 der Laschen 2 angepaßt und dienen beim Aufklappen des Korbes als Ansatzpunkt zum Ergreifen von Vorder- und Rückwand.

Vorderwand 11 und Rückwand 12 sind ebenfalls über Scharniere 17 mit der Bodenplatte 10 verbunden und weisen eine Breite auf, die dem Abstand der Scharniere 15 zueinander entspricht. In der Gebrauchsstellung bilden Vorder- bzw. Rückwand 11,12, mit der Bodenplatte 10 einen Winkel, der geringfügig größer als 90° ist, ebenso wie der Winkel zwischen Seitenwänden 13 bzw. Lasche 2 mit dem Streifen 16. Auf diese Weise erweitert sich der Korb nach oben etwas. Die Höhe von Vorder- bzw. Rückwand 11,12 ist zweckmäßigerweise so bemessen, daß sie höchstens der halben Längsabmessung der Bodenplatte 10 entspricht. Dadurch liegen sich die Oberkanten von Vorder- und Rückwand 11,12 im zusammengeklappten Zustand gegenüber und überlappen sich nicht. Die Seitenwände 13 werden dann ebenfalls nach innen geklappt und liegen plan zur Vorder- bzw. Rückwand auf. Ihre Oberfläche bildet eine glatte Ablagefläche, die beispielsweise als Packfläche für größere Lasten benutzt werden kann. Dazu können beispielsweise nicht näher dargestellte Gurte benutzt werden.

Im zusammengeklappten Zustand ragen die Rundungen 22 der Laschen 2 nach unten und bilden so einen Absatz, auf dem der zusammengeklappte Korb aufsteht. Das dient zum Schutz der unten an der Bodenplatte 10 befestigten Befestigungsmittel 30 und ermöglicht auch ein stabiles Abstellen des Korbes.

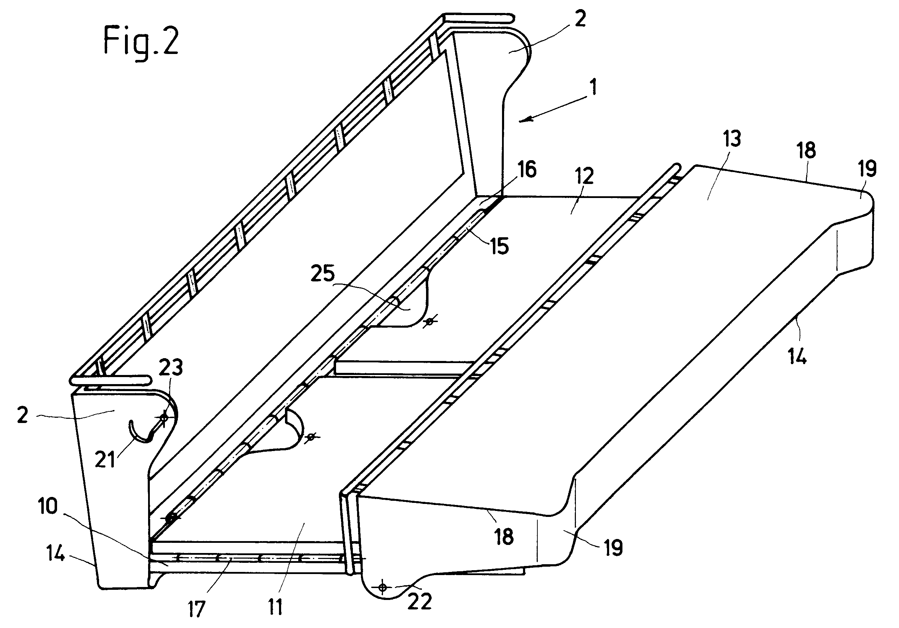

In der Gebrauchsstellung ragen Vorsprünge 19, die an die Seitenwände 13 angeformt sind, nach unten und bilden so den Schutz für die Befestigungsmittel 30. Dabei sind die Laschen 2 ebenfalls nach unten verlängert und gehen in einer Rundung in den Streifen 16 über (s. Fig. 2).

Zum Aufstellen des Korbes können auch andere Hilfsmittel, wie beispielsweise Bügel oder kleine Standfüße, vorgesehen sein.

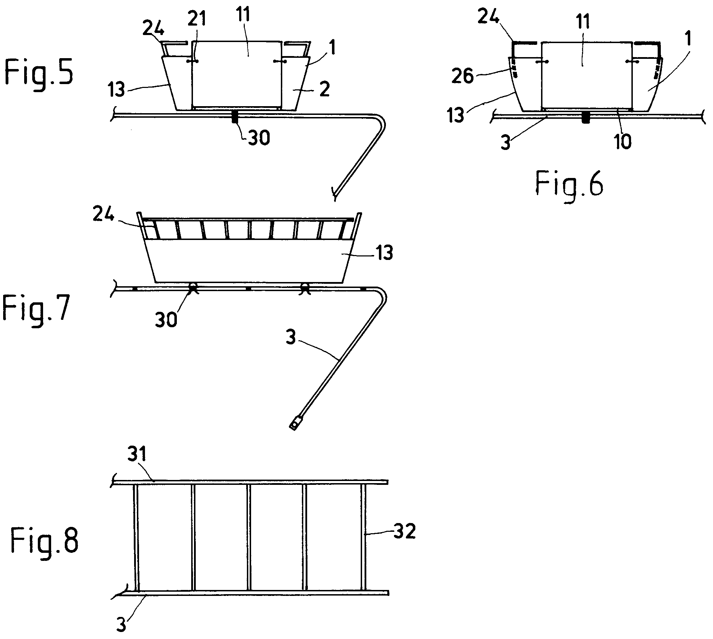

Die Seitenwände 13 lassen sich mittels Verlängerungen 24 nach oben verlängern. Die Verlängerungen 24 lassen sich dabei teleskopartig aus den Innenseiten der Seitenwände 13 herausziehen. Die Verlängerungen 24 können dabei einfach schräg nach oben geführt sein, wie in Fig. 5 dargestellt, so daß sie den Korb nach oben leicht erweitern, oder aber sie können in einer abgerundeten Führung 26 geführt sein, wie in Fig. 6 dargestellt. Dabei können auch die Seitenwände 13 eine leicht nach außen gewölbte Form aufweisen. Günstig ist es, wenn die Verlängerungen 24 auch über die Ecken 18 der Seitenwände 13 reichen und eine Fortsetzung der Lasche 2 bilden. Zum problemlosen Zusammenklappen werden die Verlängerungen 24 einfach in die Seitenwände 13 zurückgeschoben, so daß die Seitenwände 13 sich im zusammengeklappten Zustand nicht überlappen.

Der Korb 1 ist auf dem Gepäckträger 3 des Fahrrades in mehreren Stellungen befestigbar, wie die Fig. 5, 6 und 7 zeigen. So kann er beispielsweise teilweise unter dem Sattel angeordnet werden, oder relativ weit nach rückwärts versetzt, oder auch um 90° gedreht. Zu diesem Zweck sind an der Unterseite der Bodenplatte 10 Befestigungsmittel 30 vorgesehen. Bei diesen Befestigungsmitteln handelt es sich beispielsweise um Klammern oder Haken, die teilweise elastisch angeordnet sind, wobei es sich als günstig erweist, daß die Holme 31 eines Fahrradgepäckträgers 3 in etwa das Doppelte des Abstandes aufweisen, den die Sprossen 32 zueinander besitzen. So können die gleichen Befestigungsmittel verwendet werden, wenn der Korb um 90° gedreht wird.

Eine andere Art der Befestigung, die nicht näher dargestellt ist, sieht vor, daß jeweils parallel zu den Holmen 31 weitere Längsholme angebracht werden, wodurch Doppelschienen entstehen. Zwischen diesen Doppelschienen können die Befestigungsmittel, beispielsweise Schrauben oder Stifte, angeordnet sein, die durch entsprechende Bohrungen oder dergleichen an der Bodenplatte des Korbes hindurchgreifen und dort durch Muttern oder dergleichen fixiert werden.

Es sind auch Befestigungsmittel möglich, die sich zwischen den Holmen 31 des Gepäckträgers 3 erstrecken und die anpaßbare Öffnungen für Stifte oder dergleichen an der Bodenplatte aufweisen.

Eine weitere Befestigungsmöglichkeit bieten längs- und querverlaufende Schienen an der Unterseite der Bodenplatte 10, wodurch sich die Lage der Befestigungsmittel an der Bodenplatte dem jeweiligen Gepäckträger 3 anpassen läßt.

Zwischen Vorder- und Rückwand 11,12 können im Bedarfsfall Tragbügel oder Traggriffe angeordnet werden, die im zusammengeklappten Zustand beispielsweise zwischen Boden und Rückwand zu liegen kommen. Die Traggriffe können aus einzelnen Gliedern, aus Ketten oder aus zusammengeklappten Bügeln bestehen.

Eine Variante dazu bildet eine Anordnung der Tragbügel an den Seitenwänden 13, wobei die Bügel ebenfalls zusammenlegbar sind, gegebenenfalls aus zwei Teilen bestehen, so daß sie in der Ruhestellung unter den umgeklappten Seitenwänden 13 zu liegen kommen.

Der Korb 1 besteht beispielsweise aus Drahtgeflecht, Metallblech oder einer Kombination von beiden. Es können aber auch andere Materialien wie Kunststoffe, Holz oder dergleichen verwendet werden.

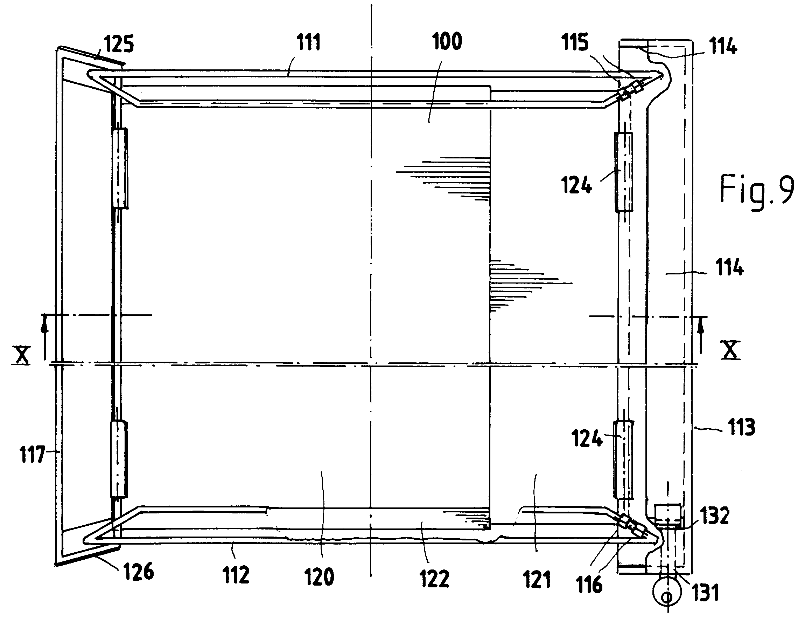

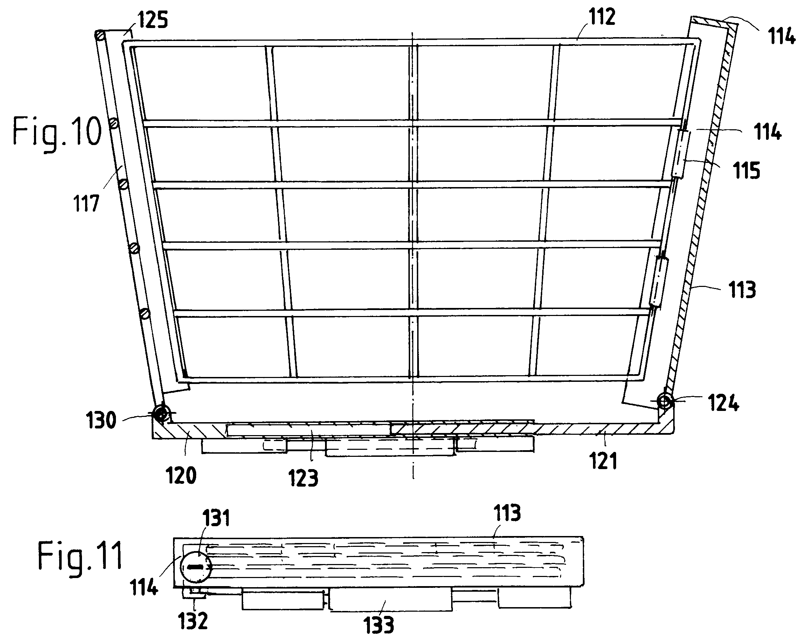

In den Fig. 9, 10 und 11 ist eine andere Variante der Erfindung dargestellt. Bei der Darstellung der Fig. 9 ist dabei die Vorder- und Rückwand und die eine Seitenwand nur als Rahmen gezeichnet und die Gitterstäbe in diesem Rahmen, die aus der Fig. 10 hervorgehen, sind weggelassen.

Bei dem Ausführungsbeispiel nach den Fig. 9 - 11 besteht die Bodenplatte 100 aus den beiden Teilen 120 und 121, die, wie insbesondere die Fig. 10 erkennen läßt, teleskopartig ineinanderschiebbar sind. Zu diesem Zweck sind am Rand des Teiles 120 der Bodenplatte 100 geeignete schienenartige Führungen 122 vorgesehen, sowie eine Ausnehmung 123 in die der Plattenteil 121 eintauchen kann. An dem Gelenk bzw. dem Scharnier 124 ist die Seitenwand 113 angelenkt, die als Deckel ausgebildet ist und an ihren drei Rändern Randleisten 114 aufweist, die im zusammengeklappten Zustand die übrigen Teile des korbartigen Gepäckträgers übergreifen. An dem vorderen und hinteren Rand des Deckels 113 sind jeweils die Vorder- und Rückwand 112 und 111 durch die Scharniere 116 und 115 gehalten, so daß die Vorder- und Rückwand in den Deckel 113 hingeschwenkt werden können. Die Winkelleisten 125 und 126 an der Seitenwand 117 stabilisieren den aufgeklappten Zustand, dem auch noch weitere, nicht dargestellte Verbindungsmittel dienen.

Beim Zusammenlegvorgang wird zunächst die gegenüberliegende Seitenwand 117 nach innen geschwenkt zu welchem Zweck das Scharnier 130 vorgesehen ist. Diese Seitenwand 117 liegt dann auf den Bodenplatte 100. Auf dieser Seitenwand 117 liegen im zusammengeklappten Zustand die Vorder- und Rückwand 111 und 112. Der Deckel 113 deckt den zusammengeklappten Zustand ab. Ein Schloß 131 mit einem Riegel 132 sichert den zusammengeklappten Zustand.

Die Befestigungsmittel 133 auf der Unterseite der Bodenplatte erlauben eine seitliche Verschiebung der Bodenplatte gegenüber den Befestigungsmitteln, so daß der zusammengeklappte Korb beim Nichtgebrauch bezüglich des Zweirads in eine Mittellage gebracht werden kann.

Auf der Außenseite bzw. Oberseite des Deckels 113 kann ein Gepäckspanner oder ein ähnliches Mittel angeordnet sein, das jedoch in der Zeichnung nicht näher dargestellt ist.

Die jetzt mit der Anmeldung und später eingereichten Ansprüche sind Versuche zur Formulierung ohne Präjudiz für die Erzielung weitergehenden Schutzes.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

## Patentansprüche

1. Korb als Gepäckträger für Zweiradfahrzeuge, insbesondere Fahrräder, im wesentlichen bestehend aus Bodenplatte und daran beweglich angeordnete Vorder-, Rück- und Seitenwände, **dadurch gekennzeichnet, daß** die Bodenplatte (10,100) aus einer schmalen Stellung des Korbes in eine breitere Gebrauchsstellung umstellbar ist.

2. Gepäckträger nach Anspruch 1, **dadurch gekennzeichnet, daß** die Bodenplatte (100) mehrteilig, beispielsweise zweiteilig und ausziehbar ausgebildet ist.

3. Gepäckträger nach Anspruch 1 oder 2, **dadurch gekennzeichnet, daß** in der Bodenplatte (10) parallel zu zwei gegenüberliegenden Seiten mit Abstand zum Rand der Bodenplatte (10) Scharniere (15) vorgesehen sind, die einen Streifen (16) an Bodenplatte (10) und daran anschließend die Seitenwände (13) tragen.

4. Gepäckträger nach einem oder mehreren der vorhergehenden Ansprüche, **dadurch gekennzeichnet, daß** Vorder- und Rückwand (11,12) über Scharniere (17) nach innen klappbar mit der Bodenplatte (10) verbunden sind und daß die Seitenwände (13) etwa rechtwinklig mit Laschen (2) verbunden sind, die an die Streifen (16) der Bodenplatte (10) anschließen und parallel in Rück- bzw. Vorderwand (11,12) verlaufen.

5. Gepäckträger nach einem oder mehreren der vorhergehenden Ansprüche, **dadurch gekennzeichnet, daß** unten an der Bodenplatte (10) quer zur Fahrtrichtung verlaufende schwalbenschwanzartige Befestigungsmittel (30) vorgesehen sind.

6. Gepäckträger nach einem oder mehreren der vorhergehenden Ansprüche, **dadurch gekennzeichnet, daß** die Seitenwände (13) im Inneren des Korbes (1) angeordnete, nach oben ausziehbare Verlängerungen (24) aufweisen.

7. Gepäckträger nach einem oder mehreren der vorhergehenden Ansprüche, **dadurch gekennzeichnet, daß** im zusammengeklappten Zustand eine der Seitenwände (130) einen Deckel bildet.

8. Gepäckträger nach einem oder mehreren der vorhergehenden Ansprüche, **dadurch gekennzeichnet, daß** der Deckel (130) auf mindestens drei Seiten Randleisten (114) aufweist, die die anderen eingeklappten Wände (111,112,117) übergreifen.

9. Gepäckträger nach einem oder mehreren der vorhergehenden Anspräche, **dadurch gekennzeichnet, daß** die Vorder- und Rückwand mit Scharnieren (115,116) mit der als Deckel ausgebildeten Seitenwand (113) verbunden sind, wobei die Vorder- und Rückwand, gegebenenfalls aufeinanderliegend, in den Deckel hineinklappbar ist.

10. Gepäckträger nach einem oder mehreren der vorhergehenden Ansprüche, **dadurch gekennzeichnet, daß** ein Schloß (131) am Deckel (113) zum Absperren des zusammengeklappten Korbes (1) vorgesehen ist.

11. Gepäckträger nach einem oder mehreren der vorhergehenden Ansprüche, **dadurch gekennzeichnet, daß** der Deckel an seiner, im zusammengeklappten Zustand nach oben weisenden Seite einen Gepäckspanner trägt.

12. Gepäckträger nach einem oder mehreren der vorhergehenden Ansprüche, **dadurch gekennzeichnet, daß** der Korb (1) mit einem Tragelement versehen ist.
